# EUROPÄISCHE PATENTSCHRIFT

(11) **EP 2 765 861 B1**
(45) Veröffentlichungstag und Bekanntmachung des Hinweises auf die Patenterteilung: **21.09.2016**
(21) Anmeldenummer: 12778277.9
(22) Anmeldetag: 11.10.2012
(51) Int. Cl.: A21B 3/02, F24C 15/02

(54) **VORRICHTUNG ZUR BEHANDLUNG VON LEBENSMITTELN MIT TÜR-REINIGUNGSSTELLUNG**
FOOD-HANDLING APPARATUS WITH A DOOR-CLEANING POSITION
DISPOSITIF DE TRAITEMENT D'ALIMENTS À POSITION DE NETTOYAGE DE LA DE PORTE

(30) Priorität: 14.10.2011 DE 102011084568
(43) Veröffentlichungstag der Anmeldung: 20.08.2014
(73) Patentinhaber: MIWE Michael Wenz GmbH, 97450 Arnstein (DE)
(72) Erfinder: Ullrich, Michael, 97776 Eußenheim (DE); Gerhard, Heiko, 97450 Büchold (DE); Pfeuffer, Christian, 97273 Kürnach (DE)
(74) Vertreter: Buchenau, Thomas
(86) Internationale Anmeldenummer: PCT/EP2012/070153
(87) Internationale Veröffentlichungsnummer: WO 2013/053818

(56) Entgegenhaltungen:
- EP-A2- 1 767 865
- DE-U1-202009 011 934

## Beschreibung

Die Erfindung betrifft eine Vorrichtung zur Behandlung von Lebensmitteln und insbesondere einen Backofen, wie z.B. einen Etagenbackofen, mit mehreren Verschlussklappen (Türen), die um eine horizontale Achse schwenkbar gelagert sind.

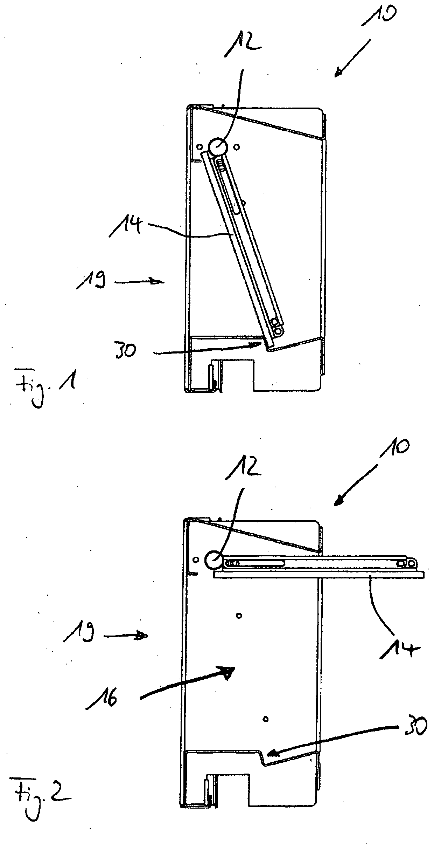

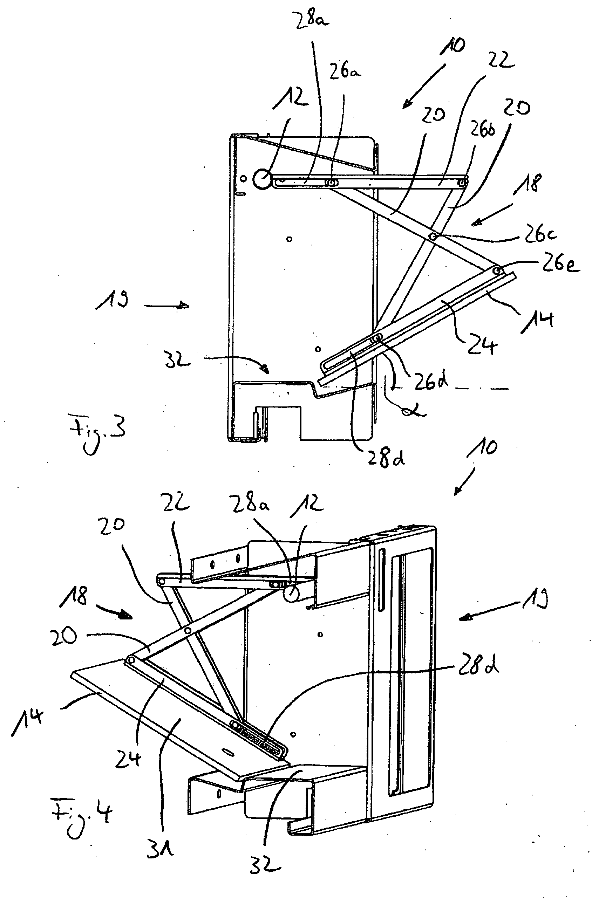

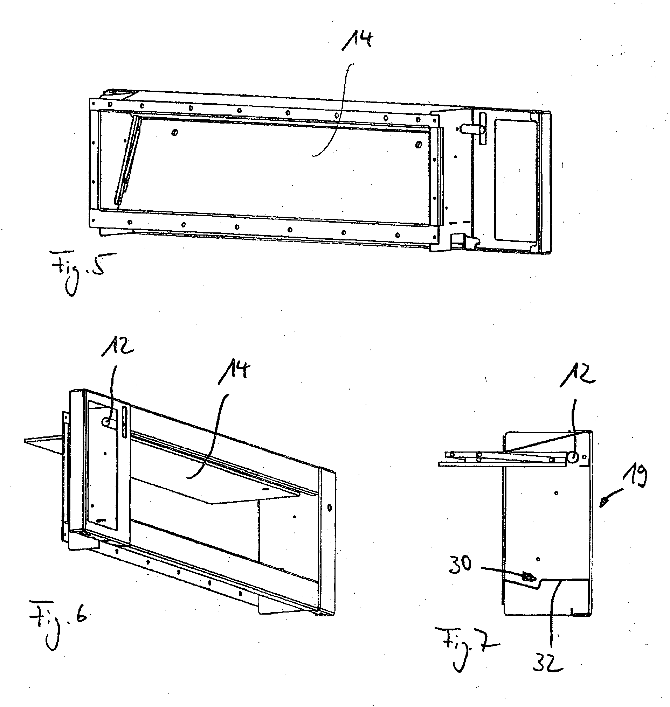

Aus dem Stand der Technik sind eine Vielzahl von Türmechanismen für derartige Backöfen bekannt. EP 1 767 865 A2 beispielsweise beschreibt folgende Mechanismen:
- eine einfache nach innen schwenkende Verschlussklappe (vgl. Figuren 1 und 2),
- eine Verschlussklappe, die im geschlossenen Zustand von außen und an der oberen Kante von innen anschlägt; zum Öffnen der Klappe wird diese auf einer bogenförmigen Bahn in eine horizontale Position nach oben bewegt (vgl. Figuren 3 und 4),
- eine einfache, um 90 Grad nach außen schwenkende Verschlussklappe (vgl. Figuren 5 und 6),
- eine Verschlussklappe, die in der geschlossenen Position leicht nach oben geneigt ist und zum Öffnen in eine horizontale Position nach oben verfahren wird.

Alle Mechanismen haben den Nachteil, dass die Reinigung der Innenseite der Verschlussklappe nicht oder nur sehr umständlich möglich ist.

Aus DE 10 2009 028 160 A1 ist ein Backofen bekannt, dessen Tür über ein Gestänge nach vorne und zur Seite verschwenkbar oder zur Seite aufschiebbar ist.

Aus DE 90 17 148 U1 ist ein Backofen mit einer Drehtür bekannt, die um eine vertikale, von der Drehtür beabstandete Achse geschwenkt wird.

Aus DE 27 21 040 A1 ist ein Haushalts-Backofen mit veränderlichem Fassungsvermögen und dementsprechend auch mit einer Öffnung veränderlicher Größe bekannt. Die Öffnung dieses Backofens wird mit einer Trommel- oder Rolltür verschlossen.

Ein erster Ansatz zur Erleichterung der Reinigung eines Backofens mit einer um eine horizontale Achse verschwenkbaren Tür findet sich in DE 20 2009 011 934 U1 und WO 2011/023608 A1. Bei diesen Backöfen verschließt die Tür eine Ofenkammer in einer Schließstellung von innen und schwenkt zum Öffnen um eine horizontale Achse in die Ofenkammer hinein. Dazu ist die Tür mit einem Ausleger verbunden. Zu Reinigungszwecken ist die Tür von dem Ausleger teilweise lösbar, damit sie um einen Drehpunkt derart nach unten geschwenkt werden kann, dass die Innenseite der Tür in Richtung Ofenöffnung weist. Dieser Mechanismus hat den Nachteil, dass zur Reinigung der Türinnenseite relativ weit in den Backofen hineingegriffen werden muss. Dies ist nicht nur unbequem, sondern birgt auch die Gefahr von Verbrennungen, wenn der Ofen während der Reinigung noch eine Restwärme aufweist.

Aus EP 1 767 865 A2 ist ein Backofen mit einer automatisch verfahrbaren Tür bekannt, die zum Öffnen - ähnlich wie von Garagentoren bekannt - gleichzeitig rotatorisch und translatorisch bewegt wird. Im geöffneten Zustand der Tür ist diese parallel zur oberen Wand des Backofens und vollständig innerhalb des Backofens angeordnet.

Der Erfindung liegt die Aufgabe zugrunde, eine Vorrichtung zur Behandlung von Lebensmitteln mit einem Türmechanismus umfassend eine um eine horizontale Achse schwenkbaren Tür zur Verfügung zu stellen, mittels welcher die Türinnenseite bequem und sicher gereinigt werden kann.

Die Lösung der Aufgabe erfolgt erfindungsgemäß mit dem Anspruch 1.

Eine erfindungsgemäße Vorrichtung zur Behandlung von Lebensmitteln umfasst einen Türmechanismus mit einer um eine horizontale Achse verschwenkbaren Tür, die eine Öffnung der Vorrichtung in einer Schließstellung verschließt, die eine Öffnung der Vorrichtung in einer Öffnungsstellung freigibt und die mittels eines Führungsmechanismus in einer vorgegebenen translatorischen und/oder rotatorischen Bewegung in eine von der Öffnungsstellung und der Schließstellung abweichende, von der Achse beabstandete Reinigungsstellung verfahrbar ist. Der Führungsmechanismlus umfasst mindestens zwei Führungsstangen, die an jeweils einem Ende mit einem Ausleger verbunden sind und die an dem jeweils gegenüberliegenden Ende mit einem Beschlag verbunden sind. Mittels mindestens eines Haltemittels wird sichergestellt, dass in der Reinigungsstellung einer Druckbelastung gegen die Türinnenseite mindestens teilweise entgegenwirkt wird. Dies kann durch ein Festlegen der Tür in der Reinigungsstellung erfolgen oder dadurch, dass die Tür durch das Haltemittel in mindestens einer quer zur Türinnenseite ausgerichteten Belastungsrichtung einen Widerstand erfährt. Dies hat den Vorteil, dass die Tür beim Reinigen unabhängig vom aufgebrachten Druck zur Reinigung der Türinnenseite in der Reinigungsstellung verharrt. Die Erfindung eignet sich insbesondere für von innen verschließende Vorrichtungen, deren Türen zum Öffnen in den Innenraum verschwenkt werden, da die Türen solcher Vorrichtungen sich aufgrund schlechter Zugänglichkeit bei bekannten Vorrichtungen nur schwer reinigen lassen. Als Haltemittel geeignet sind insbesondere ein Anschlag, Rastmittel, die eine Bewegung der Tür in Richtung Türinnenseite blockieren, ein Führungsmechanismus, dessen Endlage der Reinigungsstellung entspricht oder ein Führungsmechanismus, der die Tür bei Belastung in einer oder mehreren, quer zur Türinnenseite verlaufenden Richtungen festlegt.

Die Reinigungsstellung ist bevorzugt eine Lage, die durch die Kinematik des Führungsmechanismus und die Schwerkraft und/oder ein Antriebsmittel eindeutig festgelegt ist.

Die Tür wird beim Verfahren in die Reinigungsstellung auf einer vorgegebenen Bahn gleichzeitig translatorisch und rotatorisch bewegt. Dies hat den Vorteil, dass die Tür kontrolliert in eine für den Reinigungsvorgang ergonomische Position bewegt und in dieser Position festgelegt werden kann. Besonders bevorzugt werden diesbezüglich Türstellungen, bei denen die Innenseite der Tür zur Außenseite der Vorrichtung ausgerichtet ist. Ferner ist es erwünscht, dass die Tür möglichst nah an der Türöffnung positioniert ist oder sogar aus der Türöffnung herausragt. Ein weiterer Vorteil dieser Ausführungsform besteht darin, dass die Tür nicht von einem Ausleger gelöst werden muss, sondern von dem Führungsmechanismus kontrolliert geführt werden kann. Die Tür kann in diesem Fall aus einer Öffnungsstellungsebene, in welcher sie sich in ihrer Öffnungsstellung befindet, vollständig entfernt werden, so dass die Tür in ihrer Reinigungsstellung keinen Berührungspunkt mehr mit der Öffnungsstellungsebene aufweist.

Durch die Verwendung von mindestens zwei Führungsstangen, die an jeweils einem Ende mit einem Ausleger verbunden sind und die an dem jeweils gegenüberliegenden Ende mit einem Beschlag verbunden sind, lässt sich der Führungsmechanismus besonders einfach und kostengünstig realisieren.

In einer weiteren praktischen Ausführungsform umfasst der Führungsmechanismus ein Getriebe, vorzugsweise ein Getriebe, das eine rein translatorische Bewegung in eine translatorische und rotatorische Bewegung umsetzt. Dies hat den Vorteil, dass durch das Getriebe, insbesondere die Länge des linearen Weges, auf einfache Art und Weise eine Endposition festlegbar ist. Ferner kann anstelle eines mechanischen Antriebs ein Linearmotor eingesetzt werden, um die Tür in die Reinigungsstellung zu verfahren.

Als Führungsmechanismus besonders geeignet sind insbesondere die folgenden zwei Varianten.

Gemäß einer ersten Variante sind die Führungsstangen nach Art einer Schere angeordnet und über ein Drehgelenk miteinander verbunden. Mit dieser Variante lässt sich die Tür bei eingeschränktem Bauraum auf einfache Art und Weise in eine Reinigungsstellung mit besonders geeigneter Position und Winkelstellung verfahren.

Gemäß einer zweiten Variante sind die Führungsstangen zueinander beabstandet und derart angeordnet, dass sich die Führungsstangen beim Bewegen der Tür in die Reinigungsstellung nicht kreuzen, wobei der Abstand der Verbindungspunkte an dem Ausleger vorzugsweise kleiner ist als der Abstand der Verbindungspunkte an dem Beschlag. Weiter bevorzugt ist die näher an der Drehachse angeordnete Führungsstange länger als die von der Drehachse entfernter angeordnete Führungsstange.

In einer weiteren praktischen Ausführungsform umfasst der Führungsmechanismus ein Verriegelungselement, dessen Betätigung erforderlich ist, um die Tür in die von der Schwenkachse beabstandete Reinigungsstellung verfahren zu können. Mit einem derartigen Verriegelungsmechanismus kann eine unbeabsichtigte Betätigung des Führungsmechanismus wirksam vermieden werden.

Vorzugsweise weist das Verriegelungselement ein Steuerelement auf, das die Möglichkeit der Betätigung vom Vorhandensein weiterer Parameter abhängig macht. Als temperaturabhängiges Steuerelement kann insbesondere ein Bimetall derart in die Vorrichtung integriert sein, dass die Betätigung des Steuerelements bei Überschreitung einer bestimmten Umgebungstemperatur verhindert wird. Beispielsweise kann das Bimetall so ausgewählt und angeordnet sein, dass ein Verfahren der Tür in die Reinigungsstellung nur möglich ist, wenn die Vorrichtung im Bereich des Führungsmechanismus auf eine Temperatur unter 50 °C abgekühlt ist. Statt eines Bimetalls können als Steuerelement auch Werkstoffe mit abweichendem Wärmeausdehnungskoeffizienten verwendet werden, die entsprechend ausgewählt und ausgelegt sind. Dadurch kann verhindert werden, dass die Reinigung der Türinnenseite erfolgt, wenn eine Beschädigung der Scheibe aufgrund eines zu großen Temperaturunterschiedes zwischen der Türscheibe und dem verwendeten Reinigungsmittel zu befürchten ist. Ferner kann verhindert werden, dass sich das Reinigungspersonal beim Reinigungsvorgang an der Tür oder an Elementen des Backofeninnenraums verbrennt.

Als weiterer Steuerparameter eignet sich ein Zeitschalter, der die Betätigung des Führungsmechanismus innerhalb eines gewissen Zeitfensters nach dem Ausschalten des Backofens blockiert. Dieses Zeitfenster kann von der beim Ausschalten gemessenen Ofentemperatur abhängig gemacht werden.

In einer weiteren praktischen Ausführungsform ist der Führungsmechanismus von einer Umhüllung umgeben, um zu verhindern, dass das Eindringen von Schmutz die Funktion des Führungsmechanismus mittelfristig beeinflusst.

Weitere praktische Ausführungsformen und Vorteile der Erfindung sind nachfolgend im Zusammenhang mit den Zeichnungen beschrieben. Es zeigen:
- Fig. 1 - Fig. 4: eine erste Ausführungsform einer Baueinheit für eine erfindungsgemäße Vorrichtung in verschiedenen Stellungen und Ansichten und
- Fig. 5 - Fig. 9: eine zweite Ausführungsform einer Baueinheit einer erfindungsgemäßen Vorrichtung in verschiedenen Stellungen und Ansichten.

Die Figuren 1 bis 4 zeigen eine erste Ausführungsform einer Baueinheit 10 für eine nicht dargestellte erfindungsgemäße Vorrichtung. Bei der Baueinheit 10 handelt es sich um ein Vorsatzelement eines Backofens, das bei der Endfertigung von Backöfen fest mit den Stirnwänden einer Backkammer verbunden, insbesondere verschraubt, wird. Die gezeigte Baueinheit 10 dient lediglich zur Veranschaulichung der Erfindung. Die Erfindung kann selbstverständlich auch unabhängig von einer solchen Baueinheit 10 in einen Backofen oder eine sonstige Vorrichtung ohne separates Vorsatzelement integriert werden.

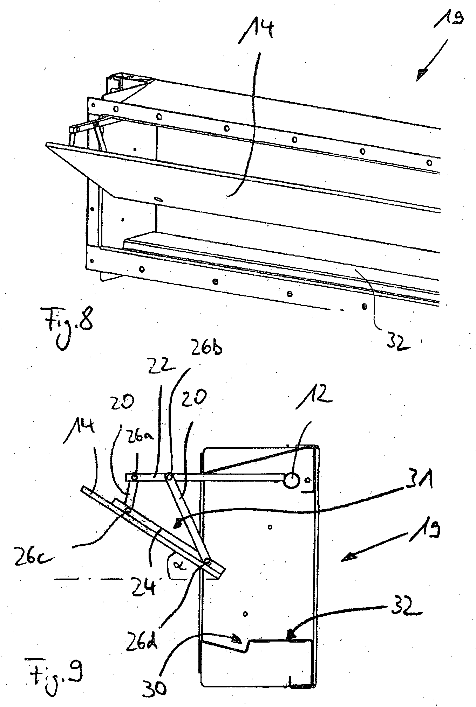

Die Baueinheit 10 umfasst einen Türmechanismus mit einer um eine horizontale Achse 12 verschwenkbaren Tür 14, die eine Öffnung 16 der Vorrichtung in einer Schließstellung (vgl. Fig. 1) verschließt, welche die Öffnung 16 der Vorrichtung in einer Öffnungsstellung (vgl. Fig. 2) freigibt und die mittels eines Führungsmechanismus 18 in einer vorgegebenen translatorischen und/oder rotatorischen Bewegung in eine von der Öffnungsstellung und der Schließstellung abweichende, von der horizontalen Schwenkachse 12 beabstandete Reinigungsstellung (vgl. Fig. 3 und Fig. 4) verfahrbar ist. In der Reinigungsstellung ist die Innenseite der Tür 14 in Richtung Ofenöffnung 19 ausgerichtet, so dass eine Reinigung sicher und bequem durchgeführt werden kann. Sinnvoll sind Winkel α der Tür 14 in der Reinigungsstellung gegenüber der Horizontalen (vgl. Fig. 3 und 9) von 0° bis 90°. Bevorzugt sind jedoch Winkel α von 0° bis 70°, besonders bevorzugt sind Winkel zwischen 20° und 60°. Bei der in den Figuren 1 bis 4 gezeigten Tür 14 handelt es sich um eine transparente Glastür. Die Glastür kann auch ganz oder teilweise bedruckt sein.

Wie in den Figuren 3 und 4 gezeigt, weist der Führungsmechanismus 18 in der gezeigten ersten Ausführungsform zwei Führungsstangen 20 auf, die jeweils an einem Ende mit einem Ausleger 22 verbunden sind und die an dem jeweils gegenüberliegenden Ende mit einem Beschlag 24 verbunden sind. Als Verbindungsglieder zwischen den Führungsstangen, den Auslegern 22 und den Beschlägen 24 sind Bolzen 26 vorgesehen. Die Bolzen 26 sind teilweise Drehgelenke (26b, 26c, 26e) und erlauben nur eine reine Drehbewegung zwischen den über die Bolzen 26 verbundenen Elementen. Teilweise greifen die Bolzen 26 jedoch auch in in den Auslegern 22 oder den Beschlägen 24 angeordnete Langlöcher 28 ein, wodurch an diesen Stellen zusätzlich zu einer Drehbewegung zwischen den über die entsprechenden Bolzen verbundenen Elementen auch eine teilweise translatorische Bewegung möglich ist. Da die Führungsstangen 20 über den Bolzen 26c nach Art einer Schere miteinander verbunden sind, kann der Führungsmechanismus auch als Scherenmechanismus bezeichnet werden.

Auch wenn zur Vereinfachung der Darstellung in den Figuren 1 bis 4 der Führungsmechanismus 18 nur auf einer Seite der Tür 14 dargestellt ist, ist es in der Praxis vorteilhaft, auf jeder Seite der Tür 14 einen entsprechenden Führungsmechanismus 18 anzuordnen, um eine einseitige Befestigung und eine daraus resultierende hohe Biegebeanspruchung der Tür 14 zu vermeiden.

Da eine rein translatorische Bewegung des in Figur 3 mit 26a bezeichneten Bolzens in eine translatorische und gleichzeitig rotatorische Bewegung des Beschlags 24 umgewandelt wird, kann der Führungsmechanismus 18 als ein Getriebe angesehen werden. Um den Führungsmechanismus motorisch anzutreiben, kann der Bolzen 26a mit einem Linearmotor verbunden werden. Dies hätte den weiteren Vorteil, dass der Linearmotor gegen eine selbsttätige Bewegung der Tür 14 von der Offenstellung in die Reinigungsstellung durch seinen inneren Widerstand entgegenwirken würde.

Sofern kein Linearmotor als Antrieb eingesetzt wird, ist es vorteilhaft, wenn der Führungsmechanismus 18 ein sonstiges Verriegelungselement (nicht gezeigt) umfasst, dessen Betätigung erforderlich ist, um die Tür 14 in die von der horizontalen Schwenkachse 12 beabstandete Reinigungsstellung (vgl. Figuren 3 und 4) verfahren zu können.

Wie in den Figuren 1 und 2 zu erkennen ist, schlägt die Tür in der gezeigten ersten Ausführungsform in der Schließstellung mit ihrer unteren Türkante von innen gegen einen Anschlag 30 an. Zum Verfahren der Tür zwischen der Schließstellung und der Öffnungsstellung kann beispielsweise ein Handhebel, ein Motor oder ein sonstiges Betätigungselement drehfest mit der Achse 12 verbunden sein. Durch den Einsatz eines Getriebes zwischen dem Betätigungselement und der Tür 14 kann der Betätigungswinkel bzw. Betätigungsweg gegenüber dem Öffnungswinkel verändert, insbesondere verringert werden, um die Bedienung zu erleichtern.

Wie in den Figuren 3 und 4 zu erkennen ist, ist die Reinigungsstellung in der ersten Ausführungsform so gewählt, dass sich die Türinnenseite 31 im Übergangsbereich zu der Unterseite 32 der Ofenöffnung 19 auf dem gleichen Höhenniveau befindet, so dass sich ein fließender Übergang (Übergang ohne Kante) zwischen der Unterseite 32 und der Türinnenseite 31 ergibt. Der Führungsmechanismus 18 ist in der ersten Ausführungsform derart gestaltet, dass dieser gleichzeitig ein Haltemittel für die Tür in der Reinigungsstellung ist, denn der Führungsmechanismus erlaubt es, zur Reinigung auf der Türinnenseite 31 Druckkräfte aufzubringen, ohne dass sich dadurch die Tür bewegt. Dies gilt bei der ersten Ausführungsform sowohl für in Richtung des Innenraums der Vorrichtung gerichtete Druckkräfte als auch für nach unten gerichtete Druckkräfte.

Nachfolgend wird die zweite Ausführungsform beschrieben. Dabei werden für Elemente, die funktionsgleich mit den Elementen der ersten Ausführungsform sind, die gleichen Bezugszeichen verwendet.

Figur 5 zeigt eine Baueinheit 10 mit geschlossener Tür 14. Die Figuren 6 und 7 zeigen diese Baueinheit 10 mit geöffneter Tür 14, und die Figuren 8 und 9 zeigen diese Baueinheit 10, mit einer sich in ihrer Reinigungsstellung befindlichen Tür 14.

Die zweite Ausführungsform weist im Wesentlichen die gleichen Elemente auf wie die erste Ausführungsform. Sie unterscheidet sich jedoch zum einen dadurch, dass die Führungsstangen 22 nicht miteinander verbunden sind und zum anderen dadurch, dass keine Langlöcher 28 in den seitlich angeordneten Auslegern 22 und Beschlägen 24 vorhanden sind. Die Bolzen 26 sind daher bei der zweiten Ausführungsform ausschließlich Drehgelenke. Die Konstruktion des Führungsmechanismus 18 bei der zweiten Ausführungsform ist daher aufgrund der geringeren Teilanzahl und der einfacheren Bearbeitung der Bauteile etwas kostengünstiger zu realisieren. Wie insbesondere in Figur 9 zu erkennen ist, ergibt sich jedoch bei Verwendung von zwei starren Führungsstangen 20 eine von der Türöffnung 19 etwas weniger ergonomische Türposition als bei der ersten Ausführungsform. Die Position lässt sich durch die Verwendung variabler, insbesondere längenverstellbarer und/oder mehrgliedriger Führungsstangen 20 deutlich verbessern.

Auch bei der zweiten Ausführungsform ist der Führungsmechanismus 22 als Haltemittel ausgebildet, da die Tür sich bei im Wesentlichen senkrecht zur Tür 14 gerichteten Druckkräften zur Reinigung der Türinnenseite 31 nicht bewegt bzw. zumindest durch die Führungsstangen 20 einen Widerstand liefert.

Die in den Figuren 1 bis 9 dargestellten horizontalen Schwenkachsen 12 sind Türwellen, die fest mit dem Ausleger 22 verbunden sind und sich daher beim Schwenken der Tür 14 mitbewegen.

Die erfindungsgemäße Vorrichtung ist vorzugsweise ein Etagenbackofen, kann jedoch auch ein sonstiger Backofen, ein Gärschrank oder eine andere Vorrichtung zur Behandlung von Lebensmitteln sein. Übliche Temperaturen in Backöfen sind 20°C bis 320°C, wobei in den meisten Fällen ein Dauerbetrieb bei ca. 240°C erfolgt. Vorzugsweise bestehen alle Elemente einer erfindungsgemäßen Vorrichtung aus Materialien, die beständig sind gegen in Bäckereibetrieben regelmäßig verwendete Laugen und Säuren sowie gegen handelsübliche Backofenreiniger.

### Bezugszeichenliste

- 10: Baueinheit
- 12: Achse
- 14: Tür
- 16: Öffnung
- 18: Führungsmechanismus
- 19: Ofenöffnung
- 20: Führungsstangen
- 22: Ausleger
- 24: Beschlag
- 26: Bolzen
- 28: Langlöcher
- 30: Anschlag
- 31: Türinnenseite
- 32: Unterseite

## Patentansprüche

1. Vorrichtung zur Behandlung von Lebensmitteln umfassend einen Türmechanismus mit einer um eine horizontale Achse (12) verschwenkbaren Tür (14), die eine Öffnung (16) der Vorrichtung in einer Schließstellung verschließt, die eine Öffnung (16) der Vorrichtung in einer Öffnungsstellung freigibt und die mittels eines Führungsmechanismus (18) in einer vorgegebenen translatorischen und/oder rotatorischen Bewegung in eine von der Öffnungsstellung und der Schließstellung abweichende, von der Achse beabstandete Reinigungsstellung verfahrbar ist;
dadurch gekenntzeichnet,
dass mindestens ein Haltemittel vorgesehen und derart angeordnet ist, dass es in der Reinigungsstellung einer Druckbelastung gegen die Türinnenseite (31) mindestens teilweise entgegenwirkt,
der Führungsmechanismus (18) derart gestaltet ist, dass die Tür (14) beim Verfahren in die Reinigungsstellung auf einer vorgegebenen Bahn gleichzeitig translatorisch und rotatorisch bewegt wird und
wobei der Führungsmechanismus (18) mindestens zwei Führungsstangen (20) umfasst, die an jeweils einem Ende mit einem Ausleger (22) verbunden sind und die an dem jeweils gegenüberliegenden Ende mit einem Beschlag (24) verbunden sind.

2. Vorrichtung nach dem vorstehenden Anspruch, **dadurch gekennzeichnet, dass** der Führungsmechanismus (18) ein Getriebe umfasst.

3. Vorrichtung nach einem oder mehreren der vorstehenden Ansprüche, **dadurch gekennzeichnet, dass** die Führungsstangen (20) nach Art einer Schere angeordnet sind und über ein Drehgelenk miteinander verbunden sind.

4. Vorrichtung einem oder mehreren der vorstehenden Ansprüche, **dadurch gekennzeichnet, dass** die Führungsstangen (20) zueinander beabstandet und derart angeordnet sind, dass die Führungsstangen (20) sich beim Bewegen der Tür in die Reinigungsstellung nicht kreuzen.

5. Vorrichtung nach einem oder mehreren der vorstehenden Ansprüche, **dadurch gekennzeichnet, dass** der Führungsmechanismus (18) ein Verriegelungselement umfasst, dessen Betätigung erforderlich ist, um die Tür in die von der horizontalen Schwenkachse beabstandete Reinigungsstellung verfahren zu können.

6. Vorrichtung nach dem vorstehenden Anspruch, **dadurch gekennzeichnet, dass** das Verriegelungselement ein Steuerelement, insbesondere ein temperaturabhängiges Steuerelement, aufweist.

7. Vorrichtung nach einem oder mehreren der vorstehenden Ansprüche, **dadurch gekennzeichnet, dass** der Führungsmechanismus (18) von einer Umhüllung umgeben ist.

## Claims

1. A food-handling apparatus comprising a door mechanism with a door (14) pivotable about a horizontal axis (12) which closes an opening (16) of the apparatus in a closed position, releases the opening (16) of the apparatus in an open position and is displaceable via a guide mechanism (18) in a predetermined translational and/or rotational movement into a cleaning position spaced apart from the axis and differing from the open position and the closed position;
**characterised in that**
at least one retaining means is provided and disposed such that it counteracts at least partially a pressure load against the inside (31) of the door in the cleaning position,
the guide mechanism (18) is configured such that the door (14) is moved in a simultaneously translational and rotational manner along a predetermined path when displaced to the cleaning position and
wherein the guide mechanism (18) comprises at least two guide rods (20) which are connected to a cantilever (22) at one respective end and connected to a fitting (24) at the respective opposing end.

2. The apparatus according to the preceding claim, **characterised in that** the guide mechanism (18) comprises a gearbox.

3. The apparatus according to one or several of the preceding claims, **characterised in that** the guide rods (20) are arranged in a scissor-like manner and interconnected by a pivot.

4. The apparatus according to one or several of the preceding claims, **characterised in that** the guide rods (20) are spaced apart from one another and disposed such that the guide rods (20) do not cross one another when moving the door into the cleaning position.

5. The apparatus according to one or several of the preceding claims, **characterised in that** the guide mechanism (18) comprises a locking element which must be actuated to displace the door into the cleaning position which is spaced apart from the horizontal pivoting axis.

6. The apparatus according to the preceding claim, **characterised in that** the locking element has a control element, in particular a temperaturedependent control element.

7. The apparatus according to one or several of the preceding claims, **characterised in that** the guide mechanism (18) is surrounded by a cover.

## Revendications

1. Dispositif pour le traitement d'aliments, comprenant un mécanisme de porte ayant une porte (14) pouvant pivoter autour d'un axe horizontal (12), qui ferme une ouverture (16) du dispositif dans une position fermée, qui libère une ouverture (16) du dispositif dans une position ouverte, et qui, au moyen d'un mécanisme de guidage (18), peut effectuer un déplacement en translation et/ou en rotation prédéterminé jusque dans une position de nettoyage différente de la position ouverte et de la position fermée et distante de l'axe ;
**caractérisé en ce qu'**au moins un moyen de retenue est prévu, et agencé de telle sorte qu'il s'oppose au moins partiellement à une charge de pression contre le côté intérieur de porte (31) dans la position de nettoyage,
le mécanisme de guidage (18) étant conçu de telle sorte que la porte (14), lors de son déplacement dans la position de nettoyage, est déplacée simultanément en translation et en rotation sur une trajectoire prédéterminée, et
le mécanisme de guidage (18) comprenant au moins deux tiges de guidage (20), qui sont reliées chacune par une extrémité à un bras d'extension (22), et qui sont reliées chacune par leur extrémité opposée à une ferrure (24).

2. Dispositif selon la revendication précédente, **caractérisé en ce que** le mécanisme de guidage (18) comprend un mécanisme de transmission.

3. Dispositif selon une ou plusieurs des revendications précédentes, **caractérisé en ce que** les tiges de guidage (20) sont agencées à la manière de ciseaux, et sont reliées entre elles par l'intermédiaire d'un pivot.

4. Dispositif selon une ou plusieurs des revendications précédentes, **caractérisé en ce que** les tiges de guidage (20) sont espacées les unes des autres et agencées de telle sorte que les tiges de guidage (20) ne se croisent pas lors du déplacement de la porte dans la position de nettoyage.

5. Dispositif selon une ou plusieurs des revendications précédentes, **caractérisé en ce que** le mécanisme de guidage (18) comprend un élément de verrouillage, dont l'actionnement est nécessaire pour pouvoir déplacer la porte dans la position de nettoyage distante de l'axe de pivotement horizontal.

6. Dispositif selon la revendication précédente, **caractérisé en ce que** l'élément de verrouillage comprend un élément de commande, en particulier un élément de commande dépendant de la température.

7. Dispositif selon une ou plusieurs des revendications précédentes, **caractérisé en ce que** le mécanisme de guidage (18) est entouré par une gaine.
